# EUROPÄISCHE PATENTSCHRIFT

(11) **EP 2 944 183 B1**
(45) Veröffentlichungstag und Bekanntmachung des Hinweises auf die Patenterteilung: **07.02.2018**
(21) Anmeldenummer: 15155789.9
(22) Anmeldetag: 19.02.2015
(51) Int. Cl.: A01F 29/12, A01D 43/08

(54) **FELDHÄCKSLER**
FORAGE HARVESTER
RAMASSEUSE-HACHEUSE

(30) Priorität: 13.05.2014 DE 102014106696
(43) Veröffentlichungstag der Anmeldung: 18.11.2015
(73) Patentinhaber: CLAAS Saulgau GmbH, 88348 Bad Saulgau (DE)
(72) Erfinder: Look, Stefan, 48231 Warendorf (DE); Urselmans, Tobias, 47574 Goch (DE)

(56) Entgegenhaltungen:
- EP-A1- 1 380 204
- EP-A1- 1 972 191

## Beschreibung

Die vorliegende Erfindung betrifft eine Vorrichtung gemäß dem Oberbegriff des Anspruches 1.

Eine Vorrichtung der eingangs genannten Art ist aus der EP 1 961 288 A1 bekannt. In dieser Druckschrift ist ein Nachbeschleunigungsorgan in Form eines Fördergebläses eines selbstfahrenden Feldhäckslers beschrieben, welches teilweise von einem Gehäuse ummantelt ist. Das Nachbeschleunigungsorgan ist mittels einer Riemenscheibe, die auf einer über die Breite des Gehäuses hinaus erstreckende Achse des Nachbeschleunigungsorgans angeordnet ist, angetrieben. Das Nachbeschleunigungsorgan ist relativ zu dem Gehäuse verschieblich angeordnet. Hierzu ist dem Gehäuse ein Verschiebemechanismus zugeordnet, das an jeweils endseitig an der Achse angeordneten Gleitvorrichtungen angreift. Der Verschiebemechanismus umfasst zwei Koppelstangen, von denen jeweils eine an den Gleitvorrichtungen angreift und diese mit einer Exzenterwelle verbindet. Die Exzenterwelle wird mittels eines an dieser mittig angreifenden, teleskopierbaren Stellgliedes verschwenkt. Die Schwenkbewegung der Exzenterwelle wird in eine translatorische Bewegung der Gleitvorrichtungen umgewandelt, um das Nachbeschleunigerorgan zu verschieben.

Auch die Druckschrift EP 1 380 204 A1 offenbart einen Feldhäcksler mit einem gegenüber dem Gehäuse verschieblichen Nachbeschleunigungsorgan. Der Achsverschiebungsmechanismus zum Verschieben des Nachbeschleunigungsorgans greift über Spindeln an der Achse des Nachbeschleunigungsorgans an. Die Spindeln sind mittels einem Elektromotor oder Hydraulikzylindern antreibbar.

Nachteilig an diesen Vorrichtungen der eingangs genannten Art ist der komplexe Aufbau des Verschiebemechanismus', der auf Grund der Vielzahl von Verbindungstellen ein erhöhtes Spiel aufweist, was eine feinfühlige Einstellung der Position zumindest erschwert.

Es ist somit Aufgabe der vorliegenden Erfindung, eine Vorrichtung der eingangs genannten Art derart weiterzuentwickeln, dass eine feinfühlige und exakte Einstellung der Position des Nachbeschleunigerorgans gewährleistet ist.

Diese Aufgabe wird erfindungsgemäß durch die kennzeichnenden Merkmale des Anspruchs 1 gelöst.

Vorteilhafte Weiterbildungen der Erfindung sind Gegenstand der Unteransprüche. Gemäß dem Anspruch 1 wird vorgeschlagen, dass die Drehachse in endseitig an dieser angeordneten Lagerkonsolen drehbar gelagert ist und dass die Lagerkonsolen mit ihrem einen Ende um eine Schwenkachse schwenkbar am Gehäuse angeordnet sind und an ihrem gegenüberliegenden freien Ende jeweils mit einer Aktorik verbunden sind. Diese Anordnung hat den Vorteil, dass lediglich zwei Verbindungs- beziehungsweise Angriffspunkte am Gehäuse erforderlich sind, um eine Bewegung zur Verstellung des von den Lagerkonsolen getragenen Nachbeschleunigungsorgans zu bewirken. Die Betätigung der Aktorik mündet unmittelbar in einer Bewegung der jeweiligen Lagerkonsole. Durch die Reduzierung der an der Verstellung des Nachbeschleunigungsorgans zusammenwirkenden Teile lässt sich eine direkte und exakte Verstellung erzielen.

Vorzugsweise können die die Lagerkonsolen als Gussteil ausgebildet sein. Insbesondere kann die Drehachse endseitig in jeweils einem Lagergehäuse aufgenommen sein, welches Bestandteil der jeweiligen Lagerkonsole ist. Die einteilige Ausführung von Lagerkonsole und Lagergehäuse als ein Gussteil vereinfacht die Herstellung und stellt eine kostengünstige Option dar.

Gemäß einer bevorzugten Ausführungsform kann die jeweilige Aktorik als Gewindespindel ausgeführt sein, die mittels eines Befestigungsmoduls gegenüber dem Gehäuse relativ beweglich gehaltert ist. Die Ausführung der Aktorik als mechanische Verstellvorrichtung stellt eine kostengünstige und auf konstruktiv einfache Weise zu realisierende Variante dar. Die Betätigung erfolgt dabei manuell durch eine Bedienperson.

Hierzu kann das Befestigungsmodul eine Grundplatte mit einem darauf angeordneten, mit einem Innengewindeabschnitt ausgeführten Verstellelement zur Aufnahme der Gewindestange aufweisen, welche mittels einer Klemmplatte zwischen dieser und dem Lagerbock eingeklemmt ist. Durch das Einklemmen der Grundplatte zwischen dem Lagerbock und der Klemmplatte ist jederzeit die Aufnahme von Druck.- und Zugkräften gewährleistet, die von dem geförderten Erntegut sowie dem Antriebsriemen auf das Nachbeschleunigungsorgan aufgebracht werden. Die Grundplatte mit dem darauf befindlichen Verstellelement erlaubt eine lineare Verstellung des Nachbeschleunigungsorgans.

Gemäß einer alternativen Ausführungsform kann die jeweilige Aktorik als hydraulischer Hubzylinder ausgeführt sein. Diese Ausführungsform erlaubt eine automatisierte Verstellung des Nachbeschleunigungsorgans. Dabei können die beiden Hubzylinder unabhängig voneinander ansteuerbar sein. Anstelle eines hydraulischen Hubzylinders kann auch ein sonstiger, als Linearantrieb ausgeführter Aktor Verwendung finden, beispielsweise ein Elektromotor.

Vorteilhafterweise können die Hubzylinder mit zumindest einem Druckbegrenzungsventil verbunden sein. Das Druckbegrenzungsventil kann als Überlasteinheit verwendet werden, die bei einer Überlastung im Erntegutförderweg auf Grund einer zu großen Erntegutmenge anspricht, um eine Ausgleichsbewegung des Nachbeschleunigungsorgans durch ein Vergrößerung des Abstandes zu der Wand ausführen zu können.

Vorzugsweise können die Hubzylinder nach dem Master-Slave-Prinzip hydraulisch gekoppelt sein. Eine Anordnung als Master- Slave- Hydraulikzylinderpaar hat den Vorteil, dass eine synchrone Verstellung beider Hubzylinder gewährleistet ist.

Weiterhin kann der jeweiligen Lagerkonsole ein Winkelsensor zugeordnet sein. Der Vorteil hierbei besteht darin, dass eine redundante Absicherung gegeben ist. Zudem kann das Nachbeschleunigungsorgan nach dem Ausführen einer Ausgleichbewegung wegen einer aufgetretenen Überlastung wieder in die vorherige Stellung zurückgeführt werden.

In bevorzugter Weiterbildung kann ein in Umfangsrichtung des Nachbeschleunigungsorgans offener Abschnitt des Gehäuses durch eine zum Nachbeschleunigungsorgan beabstandet angeordnete Wand verschlossenen sein, an der zumindest ein akustischer Sensor angeordnet ist.
- Fig. 1: einen selbstfahrenden Feldhäcksler in Seitenansicht;
- Fig. 2: eine Teilansicht eines ein Nachbeschleunigungsorgan des Feldhäckslers abschnittsweise umgebenden Gehäuses gemäß einer ersten Ausführungsform;
- Fig. 3: eine Teilansicht eines ein Nachbeschleunigungsorgan des Feldhäckslers abschnittsweise umgebenden Gehäuses gemäß einer zweiten Ausführungs-form;

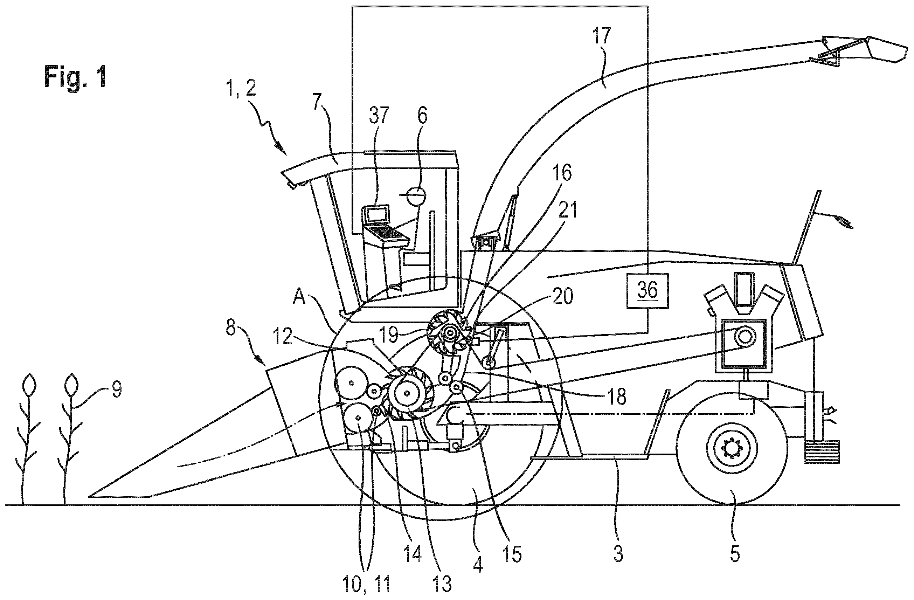

Fig. 1 zeigt eine als selbstfahrender Feldhäcksler 1 ausgeführte landwirtschaftliche Erntemaschine 2 in Seitenansicht und Schnittdarstellung. Diese baut sich auf einen Rahmen 3 auf, der von vorderen und rückwärtigen Rädern 4, 5 getragen wird. Die Bedienung des Feldhäckslers 1 erfolgt von einer Bedienperson 6 mittels einer Ein- und Ausgabevorrichtung 37 von der Fahrerkabine 7 aus, von der aus, das dem Feldhäcksler 1 frontseitig zugeordnete Vorsatzgerät 8 einsehbar ist, welches im Arbeitsbetrieb des Feldhäckslers 1 Erntegut 9 aufnimmt, schneidet und es den nachgeordneten Einzugs- und Vorpresswalzen 10, 11 zuführt. Die Einzugs- und Vorpresswalzen 10, 11 leiten das Erntegut 9 der nachgeordneten und rotierenden, mit Messern 12 besetzten Häckseltrommel 13 zu, welche das Erntegut 9 an einer Gegenschneide 14 zerkleinert. Das zerkleinerte Erntegut 9 kann sodann an eine Nachzerkleinerungseinrichtung 15 übergeben werden, bevor es von einem Nachbeschleunigungsorgan 16 angenommen wird. Aufgabe der Nachzerkleinerungseinrichtung 15 ist es, bei der Ernte von Maispflanzen die Maiskörner anzuschlagen. Die Nachzerkleinerungseinrichtung 15 kann daher auch vollständig weggelassen werden, soweit ein Anschlagen des Erntegutes 9 - wie beispielsweise bei Gras - nicht erforderlich ist. Von dem Nachbeschleunigungsorgan 16 erfährt das gehäckselte Erntegut 9 eine Beschleunigung, damit ein sicherer Austritt aus der dem Nachbeschleunigungsorgan 16 nachgeordneten Überladevorrichtung 17 in ein hier nicht näher dargestelltes Transportfahrzeug gewährleistet wird.

Der Gutfluss erfolgt im Inneren des Feldhäckslers 1 entlang eines Erntegutförderweges, der von einem Schacht 18 begrenzt ist. Oberhalb der Nachzerkleinerungseinrichtung 15 ist ein das Nachbeschleunigungsorgan 16 aufnehmendes Gehäuse 19 vorgesehen, das an dem Schacht 18 angeordnet ist. Das Gehäuse 19 umschließt das Nachbeschleunigungsorgan 16 teilweise in Umfangsrichtung und ist zum Schacht 18 hin offen ausgeführt, so dass das Nachbeschleunigungsorgan 16 abschnittsweis in den Erntegutförderweg hineinragen kann. Dem offenen Abschnitt des Gehäuses 19 gegenüberliegend ist eine als Verschleißteil ausgeführte Wand 20 angeordnet. Diese Wand 20 begrenzt gemeinsam mit dem Nachbeschleunigungsorgan 16 einen Durchgangsspalt 21. Die Weite dieses Durchgangsspaltes 21 lässt sich durch eine Relativbewegung des Nachbeschleunigungsorgans 16 gegenüber der Wand 20 einstellen. Auf der dem Nachbeschleunigungsorgan 16 abgewandten Seite der Wand 20 ist ein Sensor 22 angeordnet, der vorzugsweise als Klopfsensor ausgeführt ist.

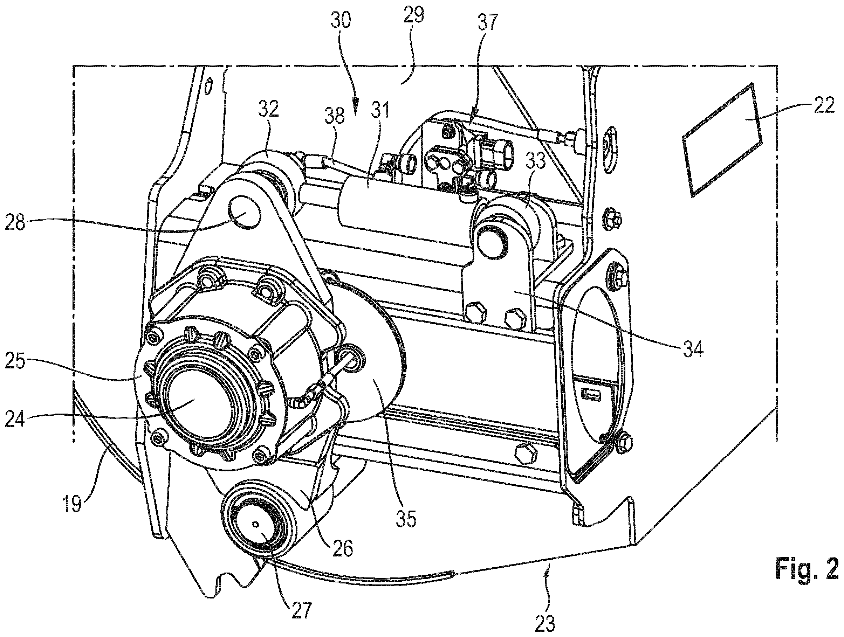

In Fig. 2 ist eine Teilansicht des Gehäuses 19 dargestellt, welches das Nachbeschleunigungsorgan 16 umschließt. Der Aufbau des Gehäuses 19 und der daran angeordneten Komponenten ist symmetrisch ausgeführt, das heißt insbesondere die nachfolgend beschriebenen Komponenten, die für die Verstellung des Nachbeschleunigungsorganes 16 vorgesehen sind, sind spiegelbildlich an dem Gehäuse 19 angeordnet.

Die Darstellung zeigt das Gehäuse 16 mit einer Seitenwand 29 sowie einer benachbart zu der Wand 20 angeordneten Eintrittsöffnung 23, durch die das von der Nachzerkleinerungseinrichtung 15 zugeführte Erntegut 9 eintritt. Durch das Gehäuse 19 erstreckt sich eine Drehachse 24, auf welche das Nachbeschleunigungsorgan 16 rotierend gelagert ist. Die Drehachse 24 ist mittels eines Lagergehäuses 25 gegenüber dem Gehäuse 19 drehbar gelagert. Das Lagergehäuse 25 ist an einer Lagerkonsole 26 angeordnet, die vorzugsweise als ein Gussteil ausgeführt ist. In alternativer Ausgestaltung können die Lagerkonsole 26 und das Lagergehäuse 25 als ein einteiliges Gussteil ausgeführt sein.

Die Lagerkonsole 26 erstreckt sich in radialer Richtung zur Drehachse 24. Dabei ist die Lagerkonsole 26 mit einem Ende um eine Schwenkachse 27 schwenkbar gelagert. Die Schwenkachse 27 ist drehfest an dem Gehäuse 19 befestigt. Am gegenüberliegenden Ende der Lagerkonsole 26 befindet sich ein Bolzen 28, der sich in Richtung der Seitenwand 29 des Gehäuses 19 erstreckt. An dem Ende der Lagerkonsole 26 greift eine Aktorik 30 an, mittels dem die Drehachse 24 und mit dieser das Nachbeschleunigungsorgan 16 relativ zur Wand 20 verstellbar ist. In der jeweiligen Seitenwand 29 ist eine nicht dargestellte Ausnehmung vorgesehen, die eine relative Bewegung des Nachbeschleunigungsorgans 16 gegenüber dem Gehäuse 19 ermöglichen. Diese Ausnehmung wird von einer Abdeckung 35 verschlossen, um das Eintreten oder Austreten von Material durch offene Abschnitte der Ausnehmung zu verhindern.

Gemäß dem in Fig. 2 dargestellten Ausführungsbeispiel ist die Aktorik 30 als ein Hydraulikzylinder 31 ausgeführt. Am Ende der Kolbenstange befindet sich ein Kolbenstangen-Auge 32, welches an dem Bolzen 28 angelenkt ist. Am Hydraulikzylinder 31 befindet sich ein Zylinderauge 33, mit dem der Hydraulikzylinder 31 durch einen Lagerbock 34 an dem Gehäuse 19 um eine Achse schwenkbar befestigt ist. Wie weiter oben ausgeführt, ist der Aufbau spiegelbildlich ausgeführt, das heißt auf der gegenüberliegenden Seite befindet sich unter anderem ein weiterer Hydraulikzylinder 31. Mit diesem Aufbau ist eine Ansteuerung der beiden Hydraulikzylinder 31 unabhängig voneinander durchführbar.

Die Hydraulikzylinder können jedoch auch als Master-Slave-Hydraulikzylinderpaar hydraulisch miteinander verbunden sein. Beim Ausfahren der Kolbenstangen erfolgt eine Druckansteuerung der Zylinderpaarung über eine Anschlussleitung an der Kolbenseite des Masterzylinders. Dieser steuert mit dem abfließenden Hydrauliköl der Ringkolbenseite den Slavezylinder kolbenseitig an, so dass beide Hydraulikzylinder 31 synchron ausfahren. Hierbei ist das Hydraulikölvolumen der Ringkolbenseite des Masterzylinders genau auf das der Kolbenseite des Slavezylinders angepasst. In den Endlagen erfolgt jedes Mal ein Hydraulikölvolumenausgleich durch ein Ventil im Kolben des Masterzylinders, damit der synchrone Lauf gewährleistet bleibt.

Das Aus- beziehungsweise Einfahren des Hydraulikzylinders 31 bewirkt eine Schwenkbewegung der Lagerkonsole 26 um die Schwenkachse 27 in Richtung der Wand 19 oder von dieser weg. Der synchrone Bewegungsablauf der Hydraulikzylinder 31 erlaubt eine direkte und exakte Ein- beziehungsweise Verstellung des Nachbeschleunigungsorganes 16 relativ zu der Wand 19. Der Hüllkreis des Nachbeschleunigungsorganes 16 nimmt einen definierten Mindestabstand zu der Wand 20 ein. Dieser Mindestabstand definiert eine Weite des Durchgangsspaltes 21, bei welcher eine größtmögliche Beschleunigung des Erntegutes 9 erreichbar ist. Dieser Mindestabstand kann vorzugsweise in einer in Fig. 12 angedeuteten Steuerungsvorrichtung 36 des Feldhäckslers 1 als Datensatz hinterlegt sein. Ist eine Reduzierung der Nachbeschleunigung auf Grund der Ernteguteigenschaften erforderlich, wird das Nachbeschleunigungsorgan 16 durch die Aktorik 30 von der Wand 20 wegbewegt, was zu einer Vergrößerung des Durchgangsspaltes 21 führt. Das Verschwenken des Nachbeschleunigungsorgans 16 um die Schwenkachse 27 wird beidseitig durch voneinander unabhängige Winkelsensoren 46 detektiert, die mit der Steuerungsvorrichtung 36 in Verbindung stehen. Die Steuerungsvorrichtung 36 wertet die Signale der Winkelsensoren 46 aus und hinterlegt die damit korrespondierenden Werte für die Weite des Durchgangsspaltes 21 in einem Speicher der Steuerungsvorrichtung 36. Somit ist zu jedem Betriebszeitpunkt die Weite des Durchgangsspaltes 21 bestimmbar beziehungsweise abrufbar.

Der jeweilige Winkelsensor 37 ist mittels einer Koppelstange 38 mit dem der Schwenkachse 27 abgewandten Ende der Lagerkonsole 26 verbunden. Die bei der Verstellung des Nachbeschleunigungsorgans 16 ausgeführte im Wesentlichen lineare Bewegung wird von der Koppelstange 38 auf den Winkelsensor 37 übertragen, der mit der Steuerungsvorrichtung 36 über eine Signalleitung in Verbindung steht. Ein die Bewegung repräsentierendes Signal wird an die der Steuerungsvorrichtung 36 zur Auswertung weitergeleitet.

Das Vorsehen eines Druckbegrenzungsventils mit integriertem Überdruckventil bietet den Vorteil, dass es in Verbindung mit den Hydraulikzylindern 31 als Überlastschutz verwendet werden kann. Durch das Druckbegrenzungsventil wird der hydraulische Druck sensiert, der von den Hydraulikzylindern 31 aufgebracht wird, um der von dem vorbeiströmenden Erntegut 9 aufgebrachten Kraft entgegenzuwirken, die eine Auslenkung des Nachbeschleunigerorgans 16 von der Wand 20 weg bewirkt. Wird ein definierter Schwellwert für diesen Druck passiert, so schaltet das Druckbegrenzungsventil in der Weise, dass das Nachbeschleunigungsorgan 16 eine Ausweichbewegung ausführt, die den Abstand zur Wand 20 vergrößert. Hierdurch lassen sich Schäden am Nachbeschleunigungsorgan 16 vermeiden. Sobald der Druck am Druckbegrenzungsventil den Schwellwert erneut passiert, wird das Nachbeschleunigungsorgan 16 von den Hydraulikzylindern 31 automatisch in seine ursprünglich eingestellte Position zurückgeführt, die mittels der Winkelsensoren detektiert wurde.

Dem vorzugsweise als Klopfsensor ausgeführten Sensor 22 kommt die Aufgabe zu, die Einstellung des Nachbeschleunigungsorganes 16 für einen Bediener des Feldhäckslers 1 dahingehend zu vereinfachen, als dass der der Mindestabstand zwischen Wand 19 und Hüllkreis des rotierenden Nachbeschleunigungsorganes 16 automatisiert eingestellt werden kann. Das Nachbeschleunigungsorgan 16 ist als rotierendes Fördergebläse ausgeführt, welches über seinen Umfang verteilt mit sich in radialer Richtung erstreckenden Leitschaufeln ausgestattet ist. Diese Leitschaufeln unterliegen auf Grund ihres Kontaktes mit Erntegut einem erhöhten Verschleiß, welcher dazu führt, dass sich der Mindestabstand zwischen dem Hüllkreis und der Wand 20 verändert. Um diesen Mindestabstand an die verschleißbedingte Abnahme des Hüllkreises anpassen zu können, ist vorgesehen, dass die als Hydraulikzylinder 31 ausgeführte Aktorik 30 derart von der Steuerungsvorrichtung 36 angesteuert wird, dass das Nachbeschleunigungsorgan 16 auf die Wand 20 zubewegt wird, bis es diese berührt. Die Berührung der Wand 19 durch das Nachbeschleunigungsorgan 16 wird von dem Sensor 22 detektiert und ein entsprechendes Signal wird an die Steuerungsvorrichtung 36 geleitet. Die Steuerungsvorrichtung 36 wertet das Signal aus und steuert die Hydraulikzylinder 31 entsprechend an, um die Bewegung in Richtung der Wand 20 zu unterbrechen. In einem drauffolgenden Schritt steuert die Steuerungsvorrichtung 36 die Hydraulikzylinder 31 derart an, dass der definierte Mindestabstand, der in der Steuerungseinrichtung 36 hinterlegt ist, zwischen der Wand 20 und dem Hüllkreis des Nachbeschleunigungsorgans 16 eingestellt wird.

Dieser Prozess der Einstellung des Mindestabstandes lässt sich sowohl bei der Montage während des Herstellprozesses eines Feldhäckslers ausführen, als auch zu einem beliebigen späteren Zeitpunkt, während des aktiven Einsatzes des Feldhäckslers im Erntebetrieb. Im ersten Fall erfolgt eine präzise Ersteinstellung des Mindestabstandes unter Berücksichtigung etwaiger Fertigungstoleranzen. Zu einem späteren Zeitpunkt wird dem Verschleiß der Leitschaufeln Rechnung getragen. Dieser Prozess lässt sich beispielsweise durch eine Bedienperson des Feldhäckslers 1 mittels einer entsprechende Eingabe an der Ein- und Ausgabeeinheit 37, wie einem Touchscreen, einem Terminal mit Tastatur oder dergleichen, in der Kabine des Feldhäckslers 1 bei Bedarf auslösen.

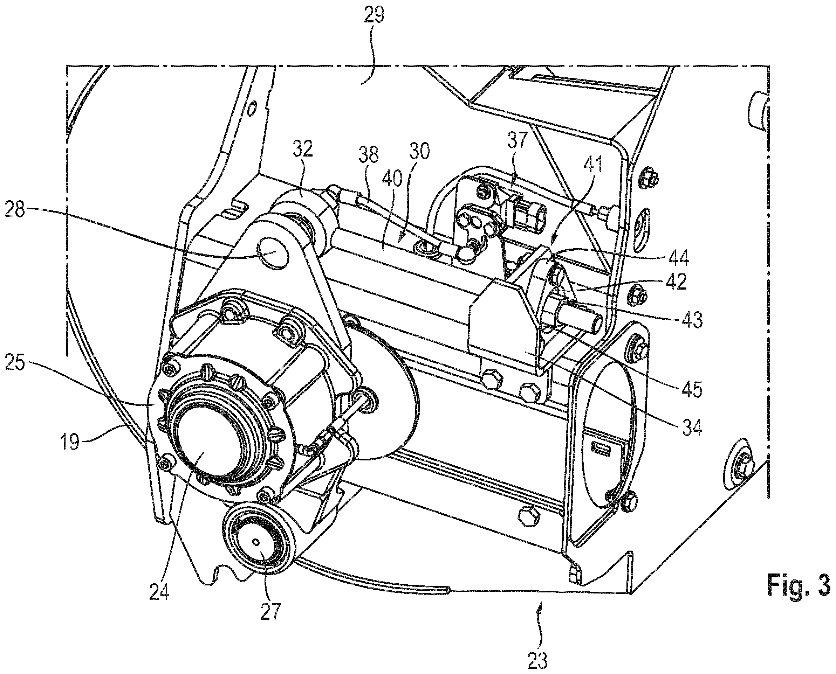

In Fig. 3 ist eine alternative Ausführungsform der Aktorik 30 dargestellt, welche der Verstellung des Nachbeschleunigungsorganes 16 dient. Gemäß diesem Ausführungsbeispiel ist die Aktorik 30, die entsprechend dem zuvor beschriebenen Ausführungsbeispiel spiegelbildlich an dem Gehäuse 19 angeordnet ist, als eine Gewindestange 40 ausgeführt. Die Gewindestange 40 ist in dem Lagerbock 34 geführt, mit welchem die Gewindestange 40 durch ein Befestigungsmodul 41 verbunden ist. Das Befestigungsmodul 41 umfasst eine kreisscheibenförmige Grundplatte 42, auf welcher ein mit einem Innengewindeabschnitt ausgeführten Verstellelement 43 angeordnet ist, das die Gewindestange 40 aufnimmt und führt. Die Grundplatte 42 wird mittels einer Klemmplatte 44 am Lagerbock 34 befestigt. Die Klemmplatte 44 ist vorzugsweise als ein im Wesentlichen gleichschenkliges Dreieck ausgeführt und weist in ihrer Mitte eine Ausnehmung 45 auf, durch die die Gewindestange 40 abschnittsweise herausragt. Die Klemmplatte 44 umfasst die Grundplatte 42. Die Befestigung der Klemmplatte 44 erfolgt durch Verschrauben mit dem Lagerbock 34. Zur Verstellung des Nachbeschleunigerorgans 16 werden die Schrauben, mit denen die Klemmplatte 44 am Lagerbock 34 befestigt ist, gelöst. Sodann lässt sich die Position des Nachbeschleunigerorgans 16 durch das Betätigen des Verstellelementes 43 verändern, indem dieses relativ zur Gewindestange 40 bewegt respektive gedreht wird. Hierdurch lässt sich eine lineare Verstellung des Nachbeschleunigungsorganes 16 erreichen, ohne dass die Gewindestange 40 selbst betätigt werden müsste. Das Einklemmen der Grundplatte 42 zwischen der Klemmplatte 44 und dem Lagerbock 34 erlaubt das Aufnehmen von Zug-und Druckkräften, die während des Betriebes des Nachbeschleunigungsorganes 16 auf die Aktorik 30 einwirken.

**Bezugszeichenliste**

| | | | |
|---|---|---|---|
| **1** | Feldhäcksler | **30** | Aktorik |
| **2** | Erntemaschine | **31** | Hydraulikzylinder |
| **3** | Rahmen | **32** | Kolbenstangen-Auge |
| **4** | Räder | **33** | Zylinderauge |
| **5** | Räder | **34** | Lagerbock |
| **6** | Bedienperson | **35** | Abdeckung |
| **7** | Ein- und Ausgabevorrichtung | **36** | Steuerungsvorrichtung |
| **8** | Vorsatzgerät | **37** | Winkelsensor |
| **9** | Erntegut | **38** | Koppelstange |
| **10** | Vorpresswalze | **39** | |
| **11** | Vorpresswalze | **40** | Gewindestange |
| **12** | Messer | **41** | Befestigungsmodul |
| **13** | Häckseltrommel | **42** | Grundplatte |
| **14** | Gegenschneide | **43** | Verstellelement |
| **15** | Nachzerkleinerungseinrichtung | **44** | Klemmplatte |
| **16** | Nachbeschleunigungsorgan | **45** | Ausnehmung |
| **17** | Überladevorrichtung | | |
| **18** | Schacht | | |
| **19** | Gehäuse | | |
| **20** | Wand | | |
| 21 | Durchgangsspalt | | |
| **22** | Sensor | | |
| **23** | Eintrittsöffnung | | |
| **24** | Drehachse | | |
| **25** | Lagergehäuse | | |
| **26** | Lagerkonsole | | |
| **27** | Schwenkachse | | |
| **28** | Bolzen | | |
| **29** | Seitenwand | | |

## Patentansprüche

1. Feldhäcksler (1) mit einem in dessen Inneren angeordneten, als ein um eine Drehachse (24) rotierenden Fördergebläse ausgeführten, teilweise von einem abschnittsweise offen ausgeführten Gehäuse (19) ummantelten Nachbeschleunigungsorgan (16), welches sich abschnittsweise in einen Erntegutförderweg erstreckt, wobei das Maß der Erstreckung in den Erntegutförderweg durch eine Verschiebung des Nachbeschleunigungsorgans (16) relativ zu dem Gehäuse (19) einstellbar ist, und einer dem offenen Abschnitt gegenüberliegenden Wand (20), wobei die Drehachse (24) in endseitig an dieser angeordneten Lagerkonsolen (26) drehbar gelagert ist, **dadurch gekennzeichnet, dass** die Lagerkonsolen (26) mit ihrem einen Ende um eine Schwenkachse (27) schwenkbar am Gehäuse (19) angeordnet sind und an ihrem gegenüberliegenden freien Ende jeweils mit einer Aktorik (30) verbunden sind.

2. Feldhäcksler (1) nach Anspruch 1, **dadurch gekennzeichnet, dass** die Lagerkonsolen (26) als Gusskörper ausgebildet sind.

3. Feldhäcksler (1) nach Anspruch 2, **dadurch gekennzeichnet, dass** die Drehachse (24) endseitig in jeweils einem Lagergehäuse (25) aufgenommen ist, welches Bestandteil der jeweiligen Lagerkonsole (26) ist.

4. Feldhäcksler (1) nach einem der Ansprüche 1 bis 3, **dadurch gekennzeichnet, dass** die jeweilige Aktorik (30) als eine Gewindespindel (40) ausgeführt ist, die mittels eines Befestigungsmoduls (41) gegenüber dem Gehäuse (19) relativ beweglich gehaltert ist.

5. Feldhäcksler (1) nach Anspruch 4, **dadurch gekennzeichnet, dass** das Befestigungsmodul (41) eine Grundplatte (42) mit einem darauf angeordneten, mit einem Innengewindeabschnitt ausgeführten Verstellelement (43) zur Aufnahme der Gewindestange (40) aufweist, welche mittels einer Klemmplatte (44) zwischen dieser und dem Lagerbock (34) eingeklemmt ist.

6. Feldhäcksler (1) nach einem der Ansprüche 1 bis 3, **dadurch gekennzeichnet, dass** die jeweilige Aktorik (30) als hydraulischer Hubzylinder (31) ausgeführt ist.

7. Feldhäcksler (1) nach Anspruch 6, **dadurch gekennzeichnet, dass** die Hubzylinder (31) mit zumindest einem Druckbegrenzungsventil verbunden sind.

8. Feldhäcksler (1) nach einem der Ansprüche 6 oder 7, **dadurch gekennzeichnet, dass** die Hubzylinder (31) nach dem Master-Slave-Prinzip hydraulisch gekoppelt sind.

9. Feldhäcksler (1) nach einem der Ansprüche 1 bis 8, **dadurch gekennzeichnet, dass** der jeweiligen Lagerkonsole (26) ein Winkelsensor (46) zugeordnet ist.

10. Feldhäcksler (1) nach einem der Ansprüche 1 bis 9, **dadurch gekennzeichnet, dass** an der Wand (20) zumindest ein akustischer Sensor (22) angeordnet ist.

## Claims

1. A forage harvester (1) comprising a post-acceleration member (16) which is arranged in the interior thereof and which is in the form of a conveyor fan rotating about an rotary axle (24) and which is partially enclosed by a housing (19) which is of a portion-wise open configuration and which extends portion-wise into a crop material conveyor path, wherein the degree of extent into the crop material conveyor path is adjustable by displacement of the post-acceleration member (16) relative to the housing (19), and a wall (20) opposite to the open portion, wherein the rotary axle (24) is mounted rotatably in bearing supports (26) arranged at the end on the rotary axle, **characterised in that** the bearing supports (26) are arranged with their one end on the housing (19) pivotably about a pivot axis (27) and are respectively connected at their opposite free end to an actuator (30).

2. A forage harvester (1) according to claim 1 **characterised in that** the bearing supports (26) are in the form of cast members.

3. A forage harvester (1) according to claim 2 **characterised in that** the rotary axle (24) is received at its ends in a respective bearing housing (25) which is a component part of the respective bearing support (26).

4. A forage harvester (1) according to one of claims 1 to 3 **characterised in that** the respective actuator (30) is in the form of a threaded spindle (40) which is mounted moveably relative to the housing (19) by means of a fixing module (41).

5. A forage harvester (1) according to claim 4 **characterised in that** the fixing module (41) has a base plate (42) with adjusting elements (43) arranged thereon and provided with a female threaded portion for receiving the threaded rod (40) which is clamped by means of a clamping plate (44) between same and the bearing bracket (34).

6. A forage harvester (1) according to one of claims 1 to 3 **characterised in that** the respective actuator (30) is in the form of a hydraulic stroke cylinder (31).

7. A forage harvester (1) according to claim 6 **characterised in that** the stroke cylinders (31) are connected to at least one pressure limiting valve.

8. A forage harvester (1) according to one of claims 6 and 7 **characterised in that** the stroke cylinders (31) are hydraulically coupled in accordance with the master-slave principle.

9. A forage harvester (1) according to one of claims 1 to 8 **characterised in that** an angle sensor (46) is associated with the respective bearing support (26).

10. A forage harvester (1) according to one of claims 1 to 9 **characterised in that** at least one acoustic sensor (22) is arranged on the wall (20).

## Revendications

1. Ensileuse (1) comprenant un organe de postaccélération (16) qui est disposé à l'intérieur de celle-ci, qui est conformé en soufflante d'alimentation tournant autour d'un axe de rotation (24), qui est entouré d'un carter (19) ouvert par endroits et qui pénètre par endroits dans un trajet d'alimentation de produit récolté, la mesure de la pénétration dans le trajet d'alimentation de produit récolté étant réglable par déplacement de l'organe de postaccélération (16) par rapport au carter (19), et comprenant une paroi (20) disposée à l'opposé de la portion ouverte, l'axe de rotation (24) étant monté à rotation dans des supports de paliers (26) disposés en position extrême sur ladite paroi, **caractérisée en ce que**, par une de leurs extrémités, les supports de paliers (26) sont disposés sur le carter (19) à pivotement autour d'un axe de pivotement (27) et, à leur extrémité libre opposée, sont reliés chacun à un ensemble actionneur (30).

2. Ensileuse (1) selon la revendication 1, **caractérisée en ce que** les supports de paliers (26) sont conformés en pièces moulées.

3. Ensileuse (1) selon la revendication 2, **caractérisée en ce que** l'axe de rotation (24) est reçu à une de ses extrémités dans un logement de palier (25) qui fait partie intégrante du support de palier (26) correspondant.

4. Ensileuse (1) selon une des revendications 1 à 3, **caractérisée en ce que** chaque ensemble actionneur (30) est conformé en broche filetée (40) qui, au moyen d'un module de fixation (41), est supportée avec une mobilité relative par rapport au carter (19).

5. Ensileuse (1) selon la revendication 4, **caractérisée en ce que** le module de fixation (41) comporte une plaque de base (42) avec, disposé dessus, un élément de déplacement (43) conformé en portion taraudée pour recevoir la tige filetée (40), laquelle est retenue au moyen d'une plaque de retenue (44) entre celle-ci et le bloc palier (34).

6. Ensileuse (1) selon une des revendications 1 à 3, **caractérisée en ce que** chaque ensemble actionneur (30) est conformé en vérin hydraulique (31).

7. Ensileuse (1) selon la revendication 6, **caractérisée en ce que** le vérin hydraulique (31) est relié à au moins une soupape de limitation de pression.

8. Ensileuse (1) selon une des revendications 6 ou 7, **caractérisée en ce que** le vérin hydraulique (31) est couplé hydrauliquement selon le principe maître-esclave.

9. Ensileuse (1) selon une des revendications 1 à 8, **caractérisée en ce qu'**à chaque support de palier (26) est associé un capteur d'angle (46).

10. Ensileuse (1) selon une des revendications 1 à 9, **caractérisée en ce que** sur la paroi (20) est disposé au moins un capteur acoustique (22).
